(19) Europäisches Patentamt
European Patent Office
Office européen des brevets

(11) **EP 2 493 102 A1**

(12) **EUROPEAN PATENT APPLICATION**

(43) Date of publication:
**29.08.2012 Bulletin 2012/35**

(51) Int Cl.:
**H04J 14/02** $^{(2006.01)}$         H04Q 11/00 $^{(2006.01)}$

(21) Application number: **11305207.0**

(22) Date of filing: **25.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Grellier, Edouard**
**FR / 91620, Nozay (FR)**

• **Morea, Annalisa**
**91620, Nozay (FR)**
• **Bononi, Alberto**
**43126, Parma (IT)**
• **Rival, Olivier**
**91620, Nozay (FR)**

(74) Representative: **Sciaux, Edmond et al**
**Alcatel-Lucent International**
**Intellectual Property & Standards**
**32 Avenue Kléber**
**92700 Colombes (FR)**

(54) **System and method for selecting an optical path in an optical network**

(57)     The invention proposes a system and method for selecting an optimal optical path through which to transmit an optical signal, the optimal optical path is one of a plurality of optical paths in a transparent optical network. Each of the plurality of optical paths includes a plurality of optical elements. For each of the plurality of optical paths, a first optical signal to noise ratio is determined for each optical element in the respective optical path. Then, for each of the plurality of optical paths, nonlinear distortions caused by each optical element in the respective optical path are modelled as Gaussian noise and a second optical signal to noise ratio associated with the modelled Gaussian noise is determined. Finally, the optimal optical path is selected using the sums of the first and second optical signal to noise ratios, respectively.

| QoT$_{N1}$ | |
|---|---|
| OSNR$^{-1}$ | 0 |
| CD | 0 |
| PMD$^2$ | 0 |
| OSNLNR$^{-1}$ | 0 |

| QoT$_{N3}$ | |
|---|---|
| OSNR$^{-1}$ | -20 |
| CD | 97 |
| PMD$^2$ | $(6)^2$ |
| OSNLNR$^{-1}$ | -30 |

| QoT$_{N4}$ | |
|---|---|
| OSNR$^{-1}$ | -18 |
| CD | 120 |
| PMD$^2$ | $(6.3)^2$ |
| OSNLNR$^{-1}$ | -25 |

| QoT$_{N7}$ | |
|---|---|
| OSNR$^{-1}$ | -14 |
| CD | 230 |
| PMD$^2$ | $(8.4)^2$ |
| OSNLNR$^{-1}$ | -21 |

FIGURE 5

**Description**

The present invention relates to the field of optical networking, and more particularly, to the characterisation of optical links in transparent networks.

Typical Wavelength Division Multiplexing (WDM) networks comprise a plurality of nodes connected to each other via optical links. The ability to predict the performance of an optical transmission path using a small number of physical characteristics is of great importance in transparent networks. The results of such determinations can be used by routing tools to determine the feasibility of various optical paths between nodes in the network. Once an optimal optical path is determined, it is possible to reserve the resources along that optical path to set up transparent optical communication.

Currently, it is possible to use various signalling protocols to convey information about the predicted performance of an optical path. For example, there have recently been proposals to further extend the Traffic Engineering (TE) extension of the Resource Reservation Protocol (RSVP) in order to include a QoT message comprising Quality of Transmission (QoT) parameters.

These parameters can include Optical Signal to Noise Ratio (OSNR), Chromatic Dispersion (CD), Polarisation Mode Dispersion (PMD) and Non Linear (NL) phase shift, which provides an indication of degradation caused by Non-Linear (NL) effects of a link. The QoT of an optical path between two points in a network can be calculated as a function of the sum of the parameter values for each element in the optical path.

Recently, very high bit rate systems have been developed which cannot use the abovementioned characterisation method. High bit rate communication systems (e.g. 100Gb/s systems), and more specifically, systems using coherent detection, do not require inline chromatic dispersion compensation, as the digital signal processing (DSP) performed in coherent receivers is capable of compensating for chromatic dispersion at the very end of an optical path. Not using inline chromatic dispersion in such systems improves performance.

By performing dispersion compensation at the receiver however, nonlinear phase no longer accurately characterizes the nonlinear effects. As a consequence of this, the nonlinear phase shift, as defined in the abovementioned QoT parameter, no longer provides a good indication of the nonlinear effects attributable to an optical path through a network.

In order to solve the problems associated with the prior art, the present invention provides a method for selecting an optimal optical path through which to transmit an optical signal, the optimal optical path being one of a plurality of optical paths in a transparent optical network, each of the plurality of optical paths including a plurality of optical elements, the method comprises the steps of:

> determining, for each of the plurality of optical paths, a first optical signal to noise ratio for each optical element in the respective optical path;
> modelling, for each of the plurality of optical paths, nonlinear distortions caused by each optical element in the respective optical path as Gaussian noise;
> determining, for each of the plurality of optical paths, a second optical signal to noise ratio associated with the modelled Gaussian noise of each optical element in the respective optical path; and
> selecting the optimal optical path using the sums of the first and second optical signal to noise ratios, respectively, of the optical elements in each of the plurality of optical paths.

Preferably, the step of selecting the optimal optical path further includes the steps of:

> calculating, using the sums of the first and second optical signal to noise ratios, respectively, an estimate of the bit error rate of each of the plurality of optical paths; and
> selecting the optical path with the lowest estimated bit error rate as the optimal optical path.

Preferably, the step of calculating an estimate of the bit error rate further comprises:

> calculating the estimate of the bit error rate of each of the plurality of optical paths using at least one of the chromatic dispersion and the polarization mode dispersion of the respective optical path.

Preferably, the method further comprises the steps of:

> generating a quality of transmission message for each of the plurality of optical paths, each quality of transmission message comprising values for parameters associated with the first and second signal to noise ratios of the respective optical path;
> propagating each quality of transmission message through the plurality of optical elements along the respective optical path;

updating each quality of transmission message to reflect the sums of the first and second signal to noise ratios, respectively, of each element through which the quality of transmission message is propagated; and

forwarding the quality of transmission message to a routing tool for use in selection of the optimal path, once the quality of transmission message has been propagated to the end of the path.

The present invention also provide a computer program comprising computer program code means adapted to perform all of the above steps when the program is run on a computer.

The above computer program can be embodied on a computer readable medium.

The present invention also provides a system for selecting an optimal optical path through which to transmit an optical signal, the optimal optical path being one of a plurality of optical paths in a transparent optical network, each of the plurality of optical paths including a plurality of optical elements, the system comprises:

first optical signal to noise ratio determining means arranged to determine, for each of the plurality of optical paths, a first optical signal to noise ratio for each optical element in the respective optical path;

modelling means arranged to model, for each of the plurality of optical paths, nonlinear distortions caused by each optical element in the respective optical path as Gaussian noise;

second optical signal to noise ratio determining means arranged to determine, for each of the plurality of optical paths, a second optical signal to noise ratio associated with the modelled Gaussian noise of each optical element in the respective optical path; and

selecting means arranged to select the optimal optical path using the sums of the first and second optical signal to noise ratios, respectively, of the optical elements in each of the plurality of optical paths.

Preferably, the selecting means further comprise:

calculating means arranged to calculate, using the sums of the first and second optical signal to noise ratios, respectively, an estimate of the bit error rate of each of the plurality of optical paths; and

selecting means arranged to select the optical path with the lowest estimated bit error rate as the optimal optical path.

Preferably, the calculating means further comprise:

calculating means arranged to calculate the estimate of the bit error rate of each of the plurality of optical paths using at least one of the chromatic dispersion and the polarization mode dispersion of the respective optical path.

Preferably, the above system further comprises:

quality of transmission generating means arranged to generate a quality of transmission message for each of the plurality of optical paths, each quality of transmission message comprising values for parameters associated with the first and second signal to noise ratios of the respective optical path;

propagating means arranged to propagate each quality of transmission message through the plurality of optical elements along the respective optical path;

updating means arranged to update each quality of transmission message to reflect the sums of the first and second signal to noise ratios, respectively, of each element through which the quality of transmission message is propagated; and

forwarding means arranged to forward the quality of transmission message to a routing tool for use in selection of the optimal path, once the quality of transmission message has been propagated to the end of the path.

Preferably, the above quality of transmission message is implemented using an extension of the Open Shortest Path First and/or the Resource Reservation Protocol — Traffic Engineering protocols of the Generalised Multi-Protocol Switching protocol.

As will be appreciated by the skilled reader, the present invention provides several advantages over the prior art. For example, by using the present invention, it is possible to quickly and accurately estimate the Bit Error Rate (BER) of an optical path through a network which comprises sections where chromatic dispersion is compensated using the digital signal processors of coherent detectors, instead of inline chromatic dispersion compensation. Moreover, in systems using coherent detection, the present invention uses fewer parameters, thereby providing a less costly solution due to propagation of a lesser number of parameters in the routing protocol. Also, a system in accordance with the present invention is more versatile than prior art systems, in that it can be used in both dispersion-managed networks and networks without dispersion management. Furthermore, it provides a simple means to trade margins between noise and nonlinear degradations (e.g. tolerating more nonlinear degradations if the OSNR is high enough). It is much more complicated to determine such tradeoffs using systems relying on known nonlinear phase criterion.

Specific embodiments of the present invention will now be described with reference to the accompanying drawings, in which:

Figure 1 is a schematic diagram of an optical network in which the present invention can be used;
Figure 2 represents QoT messages in accordance with the prior art;
Figure 3 represents a link between two nodes in a network of the type shown in Figure 1;
Figure 4a represents a diagram showing the chromatic dispersion in the link of Figure 3 when inline chromatic dispersion compensation is used;
Figure 4b represents a diagram showing the chromatic dispersion in the link of Figure 3 when inline chromatic dispersion compensation is not used; and
Figure 5 represents a QoT message in accordance with the present invention.

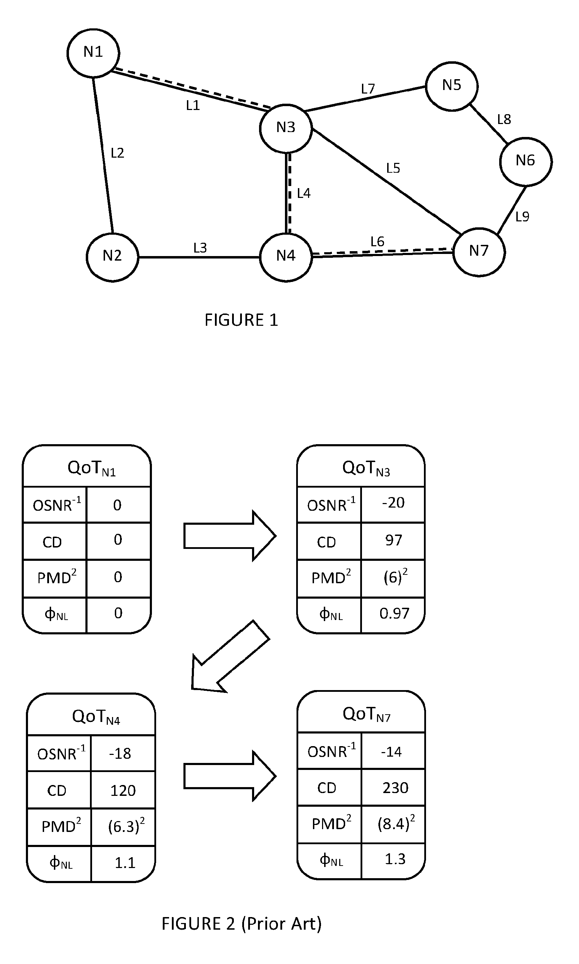

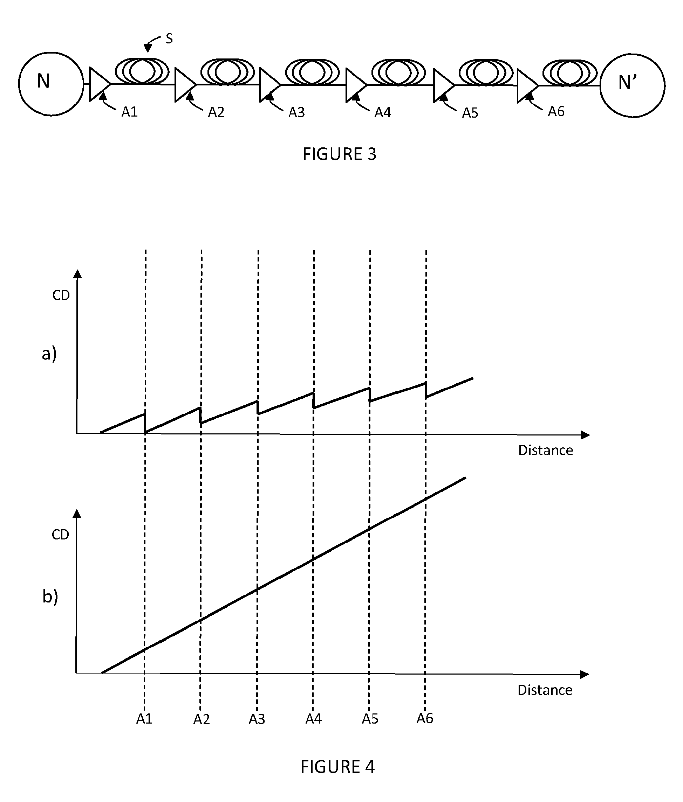

Figure 1 represents an WDM optical network comprising optical communication nodes N1, N2,..., N7 and optical communication links L1, L2,..., L9. Each link L1, L2,..., L9 can comprise a single optical fibre, or multiple optical fibres in parallel. Moreover, each link L1, L2,..., L9 can comprise multiple optical fibre spans S, and each optical fibre span S can be separated by an optical amplifier A1, A2,..., A6, as shown in Figure 3.

In the WDM shown in Figure 1, a plurality of signals are modulated at different carrier frequencies, and multiplexed together, for simultaneous transmission across the network. Some WDM networks comprise nodes which have regeneration devices that convert optical signals into electrical ones, regenerate the signals and reconvert the electrical signals into optical ones, thereby ensuring the QoT of the signals across the network. Such network nodes are said to be "opaque". As will be appreciated, whilst opaque network nodes have the advantages of ensuring QoT in a communication path, they are costly to set up and operate. Other WDM network nodes do not comprise regeneration devices, but rather switch an optical signal from one input to one or a plurality of outputs. Such network nodes are said to be "transparent". Hybrid networks do not require nodes to be either opaque or transparent. A given node is said to be a "hybrid" when it comprises an optical cross-connect (OXC) to transparently switch optical paths with high-enough QoT and a bank of regeneration devices (accessible from the OXC) for optical paths with low QoT.

The present invention is suitable for determining the QoT of an optical path through a series of transparent and hybrid nodes, regardless of the configuration and composition of the network. For ease of explanation however, Figure 1 shows a transparent network, where each optical communication node N1, N2,..., N7 is a transparent node.

With reference to Figure 1 and Figure 2, a prior art system and method of determining the QoT of an optical path through a network will now be described. Figure 1 shows an optical path (dotted line) spanning from node N1 to node N7, by way of link L1, node N3, line L4, node N4 and link L6. Each optical path includes a plurality of optical elements (where elements can, for example, consist of amplifiers, fibre spans, optical cross connects (OXC), etc.). First, node N1 generates a QoT message which comprises information relating to the inverse of the Optical Signal to Noise Ratio ($OSNR^{-1}$), the Chromatic Dispersion (CD), the squared value of the Polarization Mode Dispersion ($PMD^2$) and a nonlinear phase ($\phi_{NL}$) of the optical elements used to transmit the signal to node N1. As will be appreciated, and as shown in Figure 2, when the QoT message is created, the values of the above parameters are equal to zero, in that at node N1, no optical elements in the optical path have yet been considered.

In this case, using the inverse of the OSNR instead of the OSNR itself, as well as the squared value of the PMD instead of the PMD itself, will allow these values to be easily summed.

For a physical parameter $p$ and links $k$ and $l$, $p_{(k)}$ is the value for the propagation over a link $k$, and $p_{(k,l)}$ is the value for the propagation over both links $k$ and $l$. Thus, the above parameters accumulate as follows:

$$\frac{1}{OSNR_{(k,l)}} = \frac{1}{OSNR_{(k)}} + \frac{1}{OSNR_{(l)}} ;$$

$$CD_{(k,l)} = CD_{(k)} + CD_{(l)} ;$$

$$\left(PMD_{(k,l)}\right)^2 = \left(PMD_{(k)}\right)^2 + \left(PMD_{(l)}\right)^2 ;$$

and

$$\Phi_{NL(k,l)} = \Phi_{NL(k)} + \Phi_{NL(l)}$$

The performance or the Bit Error Rate (BER) can be determined as a function of these parameters, as follows:

$$BER = F\left(OSNR, \Phi_{NL}, CD, PMD\right)$$

In the above equations, the nonlinear phase is determined by an integral over the length of the fibre L, as follows:

$$\phi_{NL} = \int_0^L \frac{2\pi}{\lambda} \frac{n_2}{A_{eff}} P(z) dz$$

where $\lambda$ is the wavelength of the signal, $A_{eff}$ is the effective area of the fibre (which can be found in typical fibre specifications), $n_2$ is the Kerr coefficient of the fibre (which can also be found in typical fibre specifications) and P(z) is the power of the signal in z, determined by the attenuation $\alpha$ of the fibre (also available from fibre specifications), where $P(z)=P(0)^{-\alpha z}$. For a multi-span system, the per-span values of nonlinear phase are summed up and a connection is deemed feasible (regarding nonlinear impairments) if the total nonlinear phase is below a predetermined threshold (typically 1 radian).

This prior art QoT message is typically implemented using an extension of the Resource Reservation Protocol - Traffic Engineering (RSVP-TE) protocol of the Generalised Multi-Protocol Switching (GMPLS) protocol.

Once created, node N1 sends the QoT message to node N3 along link L1. Node N3 then amends the values of the parameters to include information relating to the elements along link L1, as well as its own values. The second QoT message in Figure 2 (QoT$_{N3}$) shows the parameter values after amendment by node N3, where the value of OSNR$^{-1}$ is expressed in dB (which will be converted to linear scale for summing), CD is expressed in picoseconds/nanometre (ps/nm), (PMD)$^2$ is expressed in picoseconds squared (ps$^2$) and $\phi_{NL}$ is expressed in radian (rad).

The above process is repeated by remaining nodes N4 and N7, until node N7 has amended the QoT message such that it now includes values representing the entire optical path itself. At that point, that QoT message can be sent to a routing tool.

Using these QoT messages, the routing tool can determine the optimal route through a network. When the routing tool needs to set up an optical connection through the network, it is possible, using the above system, to collect a QoT message for each optical path, and use those QoT messages to calculate and compare the QoT for each optical path, thereby allowing the system to select the optimal available optical path.

As will be appreciated, these QoT messages can also be used by network nodes N1, N2,..., N7, and any amplifiers positioned there between, to determine the optimal transmit power for a given optical path, namely the transmit power which will result in the optimal compromise between OSNR and nonlinear degradation (proportional to the span length).

Figure 3 shows details of a typical link extending between two nodes N and N'. The link is made up of a plurality of the optical fibre spans S separated by optical amplifiers A1, A2,..., A6. In systems using inline chromatic dispersion compensation, i.e. Dispersion Managed (DM) transmissions, each amplifier A1, A2,..., A6 provides some form of compensation for chromatic dispersion. Typically, this will involve optically attenuating each channel differently, such that the spectral output of the amplifier is relatively flat. A chart of the chromatic dispersion over distance of such a system is shown in Figure 4a.

In systems where there is no inline chromatic dispersion (e.g. 100Gb/s coherent detection), i.e. non-Dispersion-Managed (noDM) transmissions, the compensation is generally performed by digital signal processors located in the receiver node N'. A chart of the chromatic dispersion over time of such a system is shown in Figure 4b.

In a noDM system, the sum of $\phi_{NL}$ values has no direct relation to the Bit Error Rate (BER) of the signal at the receiver. The reason for this is that in DM systems, chromatic dispersion is almost entirely compensated at the end of each span, as that all spans are substantially identical. As such, all spans induce the same nonlinear distortions on the optical signal. Because of their similarities, these distortions add to each other in a linear way and can therefore be added up very easily, as the distortion caused by N spans is effectively equal to N times the distortion of one span (i.e. $\phi_{NL}$ increases linearly with the number of spans).

In a noDM system however, each span is very different from the others and so the nonlinear distortions that a span induces is weakly correlated (or completely uncorrelated) to the nonlinear distortions induced by other spans. In such a case, the distortions tend to partially cancel each other out rather than adding up linearly. The result of this is that the nonlinear effects in given optical path will grow more slowly than what would be predicted by the linear addition of nonlinear phase.

As has been appreciated by the applicant, in all optical paths, regardless of the compensation scheme, the overall nonlinear distortion is the sum of the random distortions induced by a large number of channels interacting through the optical Kerr effect (also known as the quadratic electro-optic effect, or QEO effect) over a large number of spans. As previously mentioned, in noDM network there is no correlation between the various elements contributing to the distortion. Moreover, the central limit theorem (CLT) states that the mean of a sufficiently large number of independent random variables, each with finite mean and variance, will exhibit substantially normal (or Gaussian) distribution.

Accordingly, In the absence of the ability of predict overall nonlinear distortion by the linear addition of single span distortions, the applicant has realised that it is possible to model distortions due to nonlinearities as additive Gaussian Noise. This modelling will henceforth be referred to as "nonlinear noise".

Thus, setting aside the linear effects of chromatic dispersion and polarization mode dispersion, a signal can be considered as the sum of the desired signal, the amplified spontaneous emission (ASE) noise, and the nonlinear noise.

According to the present invention, it is possible to sum the Optical Signal to Noise Ratio (OSNR) with what will henceforth be called the Optical Signal to Non-Linear Noise Ratio (OSNLNR) in order to evaluate the combined impact of the ASE noise and nonlinearities. Such a computation leads to the following Quality Factor (QF):

$$QF = \left( \frac{1}{OSNR} + \frac{1}{OSNLNR} \right)^{-1}$$

By using the present invention, it is also thus possible to evaluate the performance of any optical path (i.e. both DM and noDM), by determining an estimate of the Bit Error Rate (BER) of the optical path through a network as a first function ($F_1$) of the above QF, the Chromatic Dispersion (CD), and the Polarisation Mode Dispersion (PMD).

$$BER = F_1\left(QF, CD, PMD\right)$$

where $F_1$ is a function which can be determined experimentally, by known methods of measurement and extrapolation.

In the case of a system with coherent detection, in which all of the Chromatic Dispersion (CD) and the Polarisation Mode Dispersion (PMD) can be compensated by digital signal processing, it is possible to reduce the number of parameters to simply the quality factor (QF), thereby resulting in the estimate of the BER being solely a function ($F_2$) of QF, which function will be different from the first function ($F_1$):

$$BER = F_2\left(QF\right)$$

where $F_2$ can be determined experimentally, by measuring the value of the BER for a small number of values of OSNR in a back-to-back configuration (i.e. without transmission).

For differential encoding, and Gaussian noise, the function $F_2$ for an ideal coherent receiver is:

$$F_2 = erfc\left( \frac{d}{2}\sqrt{\frac{B_{ref}}{B_w}}QF \right)$$

where $B_{ref}$ is the bandwidth of definition of the OSNR (typically $B_{ref}$=0.1nm), $B_w$ is the bandwidth of the receiver, *erfc* is the complementary error function, and *d* is a coefficient depending on the modulation format. Specifically *d* is the distance between neighbouring symbols of the constellation assuming an average energy per symbol normalized to unity. For PDM-QPSK

(Polarisation Division Multiplexed Quaternary Phase Shift Keying) as used in 100Gb/s communication, this yields *d*=1. Values for other modulation formats can be found in textbooks on digital communications, for example, *E.A. Lee and D.G. Messerschmitt, "Digital Communication", Kluwer, Boston, 1994.*

For an optical path composed of N elements (where elements can, for example, consist of amplifiers, fibre spans, optical cross connects (OXC), etc.), the present invention uses the following equation to estimate the OSNLNR of the entire optical path based on the knowledge of the OSNLNR of each element:

$$\frac{1}{OSNLNR_{(k,l)}} = \left[ \frac{1}{\left(OSNLNR_{(k)}\right)^{1/\varepsilon}} + \frac{1}{\left(OSNLNR_{(l)}\right)^{1/\varepsilon}} \right]^{\varepsilon}$$

where $\varepsilon$ is a coefficient ranging between 1 and 2 that may take a unique value for the entire network. If the chromatic dispersion is completely compensated between each element, $\varepsilon$=2. In a system with no inline dispersion compensation, the signal shape is modified to such an extent between successive elements that the nonlinear noise should be considered as almost completely uncorrelated, and therefore $\varepsilon$ should be closer to 1. That is to say that $\varepsilon$ describes the degree to which Chromatic Dispersion (CD) is compensated between elements "k" and "l", $\varepsilon$ being equal to 2 for complete Chromatic Dispersion (CD) compensation and $\varepsilon$ being equal to 1 for no Chromatic Dispersion (CD) compensation. Typically, either all links of a network are DM or they are all noDM. In practice therefore, the value of $\varepsilon$ is the same for all links and is thus unique for the network. Moreover, the value of the coefficient $\varepsilon$ can for instance be chosen by numerical simulations for a route composed of identical elements.

For a given optical path across the network, the OSNLNR of element k decreases as the square of the fibre input power.

$$OSNLNR_k = \frac{A_k}{P_k^2}$$

where $P_k$ is the input power of the k-th element, and $A_k$ is a power-independent parameter, which will be discussed below.

The OSNLNR of an optical path can be obtained through measurement of the OSNR of the signal at the optimal input power, which is the input power that maximises the QF for that optical path. By differentiating QF with respect to the fibre input power and setting the derivative to zero, it is possible to show that there exists an optimal point at:

$$OSNLNR = 2 \times OSNR$$

It is therefore possible to determine $A_k$ by knowing the $P_k$ and measuring the OSNR.

Alternatively, $A_k$ can be determined by using non-linear Schrödinger equation:

$$i\frac{\partial U(z,T)}{\partial z}+\frac{i}{2}\alpha U(z,T)-\frac{1}{2}\beta_2\frac{\partial^2 U(z,T)}{\partial T^2}+\gamma\left|U(z,T)\right|^2 U(z,T)=0$$

The first term in the above equation represents the evolution of the signal U with distance z. The second term in the above equation represents the impact of fibre attenuation $\alpha$ of the fiber (which is available from the fibre specifications). The third term in the above equation represents the impact of chromatic dispersion, described by $\beta_2$, the group velocity dispersion (also available from the fibre specifications), where T is the time variable. Finally, the fourth term in the above equation represents the impact of the Kerr effect, described by y, the non linear coefficient (also available from fibre specifications), which is determined as follows:

$$\gamma = \frac{2\pi}{\lambda}\frac{n_2}{A_{eff}}$$

In accordance with the present invention, in order to determine $A_k$ using the above equation, a test-sequence $U_0=U(z=0,T)$, where z=0 indicates the position of the emitter, is first chosen. $U(z=0,T)$ is generally chosen as the optical field generated by pseudo-random sequences of data on a few wavelengths.

The next step is to determine the value of the optical field at the receiver after propagation through the fibre span under consideration. This is the solution $U_L=U(z=L,T)$ of the above nonlinear Schrödinger equation with initial condition $U_0$ and with coefficients of the equation determined by the fibre span characteristics. $U_L$ can be determined through computer simulation using a numerical solver for nonlinear partial differential equations.

The next step is to subtract $U_0$ from $U_L$. The resulting field $U_{NL}=U_L=U_0$ represents the nonlinear distortions caused by propagation through the fiber span. Finally, it is possible to determine $A_k$, as follows:

$$A_k = \frac{P^2}{\mathrm{var}(U_{NL})}$$

where P is the power of the optical signal at the emitter and *var* is the variance operator.

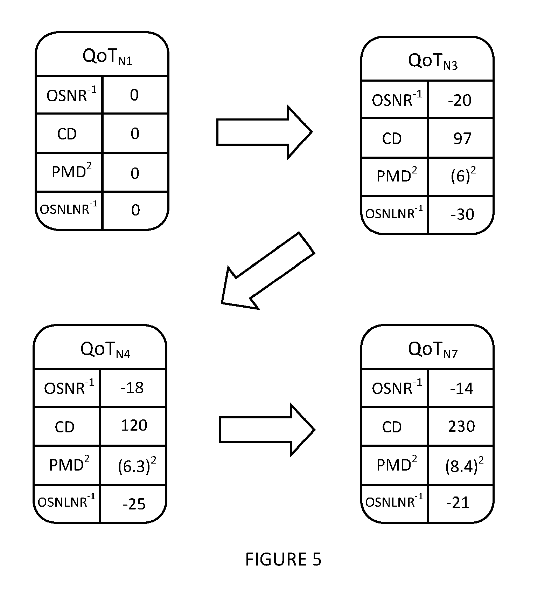

With reference to Figure 1 and Figure 5, a system and method of determining the QoT of an optical path in accordance with one embodiment of the present invention will now be described. As mentioned above, Figure 1 shows an optical path N1-L1-N3-L4-N4-L6-N7 (dotted line) spanning from node N1 to node N7, by way of link L1, node N3, line L4, node N4 and link L6.

First, node N1 generates a quality of transmission message $QoT_{N1}$ which comprises information relating to the inverse of the Optical Signal to Noise Ratio (OSNR[-1]), the Chromatic Dispersion (CD), the squared value of the Polarization Mode Dispersion (PMD[2]) and the inverse of the Optical Signal to Non-Linear Noise Ration (OSNLNR[-1]), which is determined as described above. The QoT messages in accordance with the present invention are implemented using an extension of the Open Shortest Path First (OSPF) and/or Resource Reservation Protocol - Traffic Engineering (RSVP-TE) protocols of the Generalised Multi-Protocol Switching (GMPLS) protocol. Alternatively, the QoT messages in accordance with the present invention can be implemented using any suitable protocol. As will be appreciated, and as shown in Figure 5, when the $QoT_{N1}$ is created, the values of the above parameters are zero, in that no elements in the optical path have yet been considered.

Then, the node N1 will send the message $QoT_{N1}$ to node N3. Node N3 then uses the information contained in the message $QoT_{N1}$, along with information relating to the inverse of the Optical Signal to Noise Ratio (OSNR[-1]), the Chromatic Dispersion (CD), the squared value of the Polarization Mode Dispersion (PMD[2]) and the inverse of the Optical Signal to Non-Linear Noise Ration (OSNLNR[-1]) of the link L1 and itself (i.e. node N3), to generate message $QoT_{N3}$, as shown in Figure 5. That is to say that the values of the parameters in message $QoT_{N3}$ will be the sum of the values of parameters in message $QoT_{N1}$, and the values associated with the elements of link L1, and node N3. As will be appreciated, the values of the parameters for links L1, L2,..., L9 can be determined experimentally, or can be estimated based on characteristics of the elements in that part of the optical path (e.g. fibre length, fibre type, amplifier type, etc).

In turn, the node N3 will send the message $QoT_{N3}$ to node N4. Node N4 then uses the information contained in the message QoT$_{N3}$, along with information relating to the inverse of the Optical Signal to Noise Ratio (OSNR$^{-1}$), the Chromatic Dispersion (CD), the squared value of the Polarization Mode Dispersion (PMD$^2$) and the inverse of the Optical Signal to Non-Linear Noise Ration (OSNLNR$^{-1}$) of the link L4 and itself (i.e. node N4), to generate message QoT$_{N4}$, as shown in Figure 5. Again, the values of the parameters in message QoT$_{N4}$ will be the sum of the values of parameters in message QoT$_{N3}$, and the values associated with the elements of link L4, and node N4. The above process will continue until N7 generates message QoT$_{N7}$ containing a total value for each parameter in the optical path N1-L1-N3-L4-N4-L6-N7.

In a preferred embodiment, this message will then be sent to the routing tool in order to determine the quality of transmission of the optical path N1-L1-N3-L4-N4-L6-N7, as described above. The routing tool then uses this information to select the optimal path through which to route a signal. The signal is then transmitted through the selected path. In one embodiment, the optimal optical path will be the path with the lowest Bit Error Rate (BER) estimate. In other embodiments, however, other network parameters can also be used by the routing tool to influence the selection of the optimal optical path.

As will be appreciated, in noDM systems, where the BER is determined simply as a function of QF, the QoT messages of the present invention do not need to include the CD and PMD parameters.

It should be noted that the above description, and associated drawings simply illustrate the principles of the present invention and are not meant to be limiting in any way. Moreover, the steps of the abovementioned methods and the associated components of the abovementioned systems can be performed and implemented, respectively, by programmed computers.

## Claims

1.    A method for selecting an optimal optical path through which to transmit an optical signal, the optimal optical path being one of a plurality of optical paths in a transparent optical network, each of the plurality of optical paths including a plurality of optical elements, the method comprising the steps of:

   determining, for each of the plurality of optical paths, a first optical signal to noise ratio for each optical element in the respective optical path;
   modelling, for each of the plurality of optical paths, nonlinear distortions caused by each optical element in the respective optical path as Gaussian noise;
   determining, for each of the plurality of optical paths, a second optical signal to noise ratio associated with the modelled Gaussian noise of each optical element in the respective optical path; and
   selecting the optimal optical path using the sums of the first and second optical signal to noise ratios, respectively, of the optical elements in each of the plurality of optical paths.

2.    The method of claim 1, wherein the step of selecting the optimal optical path further includes the steps of:

   calculating, using the sums of the first and second optical signal to noise ratios, respectively, an estimate of the bit error rate of each of the plurality of optical paths; and
   selecting the optical path with the lowest estimated bit error rate as the optimal optical path.

3.    The method of claim 2, wherein the step of calculating an estimate of the bit error rate further comprises:

   calculating the estimate of the bit error rate of each of the plurality of optical paths using at least one of the chromatic dispersion and the polarization mode dispersion of the respective optical path.

4.    The method of any of the preceding claims, further comprising the steps of:

   generating a quality of transmission message for each of the plurality of optical paths, each quality of transmission message comprising values for parameters associated with the first and second signal to noise ratios of the respective optical path;
   propagating each quality of transmission message through the plurality of optical elements along the respective optical path;
   updating each quality of transmission message to reflect the sums of the first and second signal to noise ratios, respectively, of each element through which the quality of transmission message is propagated; and
   forwarding the quality of transmission message to a routing tool for use in selection of the optimal path, once the quality of transmission message has been propagated to the end of the path.

5. The method of claim 4, wherein the quality of transmission message is implemented using an extension of the Open Shortest Path First and/or the Resource Reservation Protocol - Traffic Engineering protocols of the Generalised Multi-Protocol Switching protocol.

6. A computer program comprising computer program code means adapted to perform all of the steps of any of claims 1 to 3 when the program is run on a computer.

7. A computer program as claimed in claim 6 embodied on a computer readable medium.

8. A system for selecting an optimal optical path through which to transmit an optical signal, the optimal optical path being one of a plurality of optical paths in a transparent optical network, each of the plurality of optical paths including a plurality of optical elements, the system comprising:

   first optical signal to noise ratio determining means arranged to determine, for each of the plurality of optical paths, a first optical signal to noise ratio for each optical element in the respective optical path;
   modelling means arranged to model, for each of the plurality of optical paths, nonlinear distortions caused by each optical element in the respective optical path as Gaussian noise;
   second optical signal to noise ratio determining means arranged to determine, for each of the plurality of optical paths, a second optical signal to noise ratio associated with the modelled Gaussian noise of each optical element in the respective optical path; and
   selecting means arranged to select the optimal optical path using the sums of the first and second optical signal to noise ratios, respectively, of the optical elements in each of the plurality of optical paths.

9. The system of claim 8, wherein the selecting means further comprise:

   calculating means arranged to calculate, using the sums of the first and second optical signal to noise ratios, respectively, an estimate of the bit error rate of each of the plurality of optical paths; and
   selecting means arranged to select the optical path with the lowest estimated bit error rate as the optimal optical path.

10. The system of claim 9, wherein the calculating means further comprise:

    calculating means arranged to calculate the estimate of the bit error rate of each of the plurality of optical paths using at least one of the chromatic dispersion and the polarization mode dispersion of the respective optical path.

11. The system of any of claims 8 to 10 further comprising:

    quality of transmission generating means arranged to generate a quality of transmission message for each of the plurality of optical paths, each quality of transmission message comprising values for parameters associated with the first and second signal to noise ratios of the respective optical path;
    propagating means arranged to propagate each quality of transmission message through the plurality of optical elements along the respective optical path;
    updating means arranged to update each quality of transmission message to reflect the sums of the first and second signal to noise ratios, respectively, of each element through which the quality of transmission message is propagated; and
    forwarding means arranged to forward the quality of transmission message to a routing tool for use in selection of the optimal path, once the quality of transmission message has been propagated to the end of the path.

12. The system of claim 11, wherein the quality of transmission message is implemented using an extension of the Open Shortest Path First and/or the Resource Reservation Protocol — Traffic Engineering protocols of the Generalised Multi-Protocol Switching protocol.

FIGURE 1

| QoT$_{N1}$ | |
|---|---|
| OSNR$^{-1}$ | 0 |
| CD | 0 |
| PMD$^2$ | 0 |
| $\phi_{NL}$ | 0 |

| QoT$_{N3}$ | |
|---|---|
| OSNR$^{-1}$ | -20 |
| CD | 97 |
| PMD$^2$ | $(6)^2$ |
| $\phi_{NL}$ | 0.97 |

| QoT$_{N4}$ | |
|---|---|
| OSNR$^{-1}$ | -18 |
| CD | 120 |
| PMD$^2$ | $(6.3)^2$ |
| $\phi_{NL}$ | 1.1 |

| QoT$_{N7}$ | |
|---|---|
| OSNR$^{-1}$ | -14 |
| CD | 230 |
| PMD$^2$ | $(8.4)^2$ |
| $\phi_{NL}$ | 1.3 |

FIGURE 2 (Prior Art)

FIGURE 3

FIGURE 4

| QoT$_{N1}$ | |
|---|---|
| OSNR$^{-1}$ | 0 |
| CD | 0 |
| PMD$^2$ | 0 |
| OSNLNR$^{-1}$ | 0 |

| QoT$_{N3}$ | |
|---|---|
| OSNR$^{-1}$ | -20 |
| CD | 97 |
| PMD$^2$ | $(6)^2$ |
| OSNLNR$^{-1}$ | -30 |

| QoT$_{N4}$ | |
|---|---|
| OSNR$^{-1}$ | -18 |
| CD | 120 |
| PMD$^2$ | $(6.3)^2$ |
| OSNLNR$^{-1}$ | -25 |

| QoT$_{N7}$ | |
|---|---|
| OSNR$^{-1}$ | -14 |
| CD | 230 |
| PMD$^2$ | $(8.4)^2$ |
| OSNLNR$^{-1}$ | -21 |

FIGURE 5

| | Europäisches Patentamt European Patent Office Office européen des brevets | **EUROPEAN SEARCH REPORT** | Application Number EP 11 30 5207 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/021976 A1 (ERICSSON TELEFON AB L M [SE]; BELLAGAMBA ELISA [SE]; BOTTARI GIULIO [I] 24 February 2011 (2011-02-24) * page 1, line 4 - line 6 * * page 1, line 19 - page 2, line 22 * * page 2, line 30 - page 4, line 19 * * page 5, line 31 - page 8, line 7; figures 1,2 * * page 8, line 21 - page 9, line 7; figure 4 * * page 9, line 12 - page 15, line 22; figures 5-7 * * page 18, line 7 - page 31, line 21; figure 9 * ----- | 1-12 | INV. H04J14/02 ADD. H04Q11/00 |
| X | WO 2010/031443 A1 (ERICSSON TELEFON AB L M [SE]; CASTOLDI PIERO [IT]; CUGINI FILIPPO [IT]) 25 March 2010 (2010-03-25) * page 11, line 25 - page 14, line 23; figure 1 * * page 16, line 1 - page 17, line 3; figures 7,8,9 * * page 19, line 8 - page 20, line 13 * ----- | 1-12 | |
| A | ORENSTEIN M ET AL: "Nonlinear Phase Noise in Phase-Modulated WDM Fiber-Optic Communications", IEEE PHOTONICS TECHNOLOGY LETTERS, IEEE SERVICE CENTER, PISCATAWAY, NJ, US, vol. 16, no. 5, 1 May 2004 (2004-05-01), pages 1307-1309, XP011111585, ISSN: 1041-1135, DOI: 10.1109/LPT.2004.826257 * the whole document * ----- -/-- | 1-12 | TECHNICAL FIELDS SEARCHED (IPC) H04B H04J |

The present search report has been drawn up for all claims

| Place of search | Date of completion of the search | Examiner |
|---|---|---|
| The Hague | 12 August 2011 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 30 5207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | O.V. SINKIN ET AL: "Calculation of the bit-error ratio in wavelength-division-multiplexed return-to-zero systems when the nonlinear penalty is dominated collision-induced timing jitter", 2006 OPTICAL FIBER COMMUNICATION CONFERENCE AND THE NATIONAL FIBER OPTIC ENGINEERS CONFERENCE, 1 January 2006 (2006-01-01), page 3 PP., XP55004460, DOI: 10.1109/OFC.2006.215784 ISBN: 978-1-55-752803-2 * the whole document * ----- | 1-12 | |
| | | | **TECHNICAL FIELDS SEARCHED (IPC)** |

The present search report has been drawn up for all claims

| Place of search | Date of completion of the search | Examiner |
|---|---|---|
| The Hague | 12 August 2011 | Roldán Andrade, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 30 5207

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2011

| Patent document cited in search report | Publication date | Patent family member(s) | Publication date |
|---|---|---|---|
| WO 2011021976 A1 | 24-02-2011 | NONE | |
| WO 2010031443 A1 | 25-03-2010 | NONE | |

For more details about this annex : see Official Journal of the European Patent Office, No. 12/82